# EUROPEAN PATENT APPLICATION

(11) **EP 1 441 552 A1**
(43) Date of publication of application: **28.07.2004**
(21) Application number: 04002494.5
(22) Date of filing: 09.07.1998
(51) Int. Cl.: H04Q 7/32

(54) **Subscriber system with user station with removable data store**

(30) Priority: 18.07.1997 GB 9715243
(62) Divisional of application: 98932401.7
(71) Applicant: Orange Personal Communications Services Ltd., Bradley Stoke, Bristol BS32 4QJ (GB)
(72) Inventor: Green, Mark, North Somerset BS24 9XB (GB)
(74) Representative: Spaargaren, Jerome

(57) **Abstract**

Embodiments of the invention are concerned with a method of operating user stations in a mobile communications system. In particular, the method allows a set of mobile station identifiers to be defined for use in relation to a particular removable data store (SIM), the SIM being necessary for the mobile station to obtain service in a network.

The set defined for the SIM may be specified in records held in the network, and, by comparing the IMEI of a mobile station into which the SIM is currently inserted with the set previously defined, the network can determine whether or not the mobile station is intended to be used with the SIM. The SIM is equipped with means for altering the operative state thereof in response to data received from the network, so as to prevent the mobile station from receiving full service in the mobile communications network.

## Description

### Field of the Invention

This invention relates to a method of operating user stations in a subscriber system, the user stations being adapted for use with removable data store, such as a subscriber identity module (SIM) as used in a GSM (Global System for Mobile communications) digital cellular radio system, and to such a data store.

### Background of the Invention

In a known conventional GSM system, each subscriber is provided with a SIM, also referred to as a smart card, which is inserted into a user station, such as a mobile telephone handset, in order to allow the subscriber to receive service in a GSM network with the user station.

The SIM holds various permanent data records, such as a record of the international mobile subscriber identity (IMSI) whereby the subscriber is recognised, and a record of an authentication key whereby the subscriber is authenticated by a mobile communications network. The SIM also holds various other subscriber-specific data records, some of which are modifiable.

The SIM format and the SIM/user station interface are standardised such that a SIM may be placed in any of a number of different user stations in order to obtain service in a GSM network. This has the advantage of allowing the SIM to be readily transportable between user stations, but various disadvantages accrue.

Some mobile network operators subsidise the initial cost of a user station for use in their own network. However, since it is possible to transport a SIM from a user station intended for use on one network to a user station intended for use on another, subsidies provided by one network operator have been used to the benefit of a different network operator.

Furthermore, a user station into which a SIM is placed may be stolen. It has in the past been possible to obtain service on a network using a stolen user station.

A number of mechanisms are known which allow a user station to be "latched" to a SIM, which are generally derived from GSM Technical Specification 02.22. The latching is performed on the first valid SIM which is inserted into the user station. The latching, which is intended to prevent operation of the user station with a different SIM, is permanent until a predetermined unlatching code is entered in the user station, after which time the latching function is permanently disabled. These types of latching mechanism rely on the security of the software provided in the user station, which can occasionally be circumvented by a determined fraudster.

There are also known network-based mechanisms for barring users of stolen user stations. A GSM network operator may maintain an equipment identity register (EIR), which holds a list of international mobile equipment identities (IMEIs) and their associated status. The EIR may hold a black list of IMEIs for user stations which should be barred, for example because the user stations are stolen. However, this mechanism requires the network operator to first be notified of a stolen user station, and then to make a decision whether or not to positively bar the user station from the network.

EP-A-0675659 describes a "self-disabling" device for a mobile user station. The network operator compiles a list of IMEIs of stolen user stations and broadcasts the list in the network. A user station stores the list of stolen IMEIs in a buffer memory, and compares the IMEI of the user station with each of the IMEIs on the stored list. If the IMEI of the user station corresponds with an item on the stored list, the user station transmits a message to the network indicating that the user station is being disabled, and then proceeds to disable the transmitter of the user station. Again, this mechanism requires the network operator to be aware of the identities of stolen mobile stations, and to make a barring decision when placing the IMEI on the list broadcast in the network.

International patent application PCT/FI96/00266, publication number WO96/36194, describes an authentication method whereby the identity of the subscriber equipment is transmitted to an authentication system operating at the network level. The authentication system compares the transmitted identity with that stored for the subscriber, and, in the event that the compared identities are different and the transmitted identity is not validated by the network, the authentication system invokes procedures for disabling or restricting access of the subscriber equipment (the identity is added to a blacklist).

International patent application PCT/FI96/00236, publication number WO96/35304, describes an authentication method whereby the identity of either the subscriber equipment or subscriber module (SIM) are compared by authentication means implemented in the subscriber equipment. In a first arrangement, the identity of the subscriber equipment last used in conjunction with the SIM is stored in the SIM. In a second arrangement, the identity of the SIM last used in conjunction with the subscriber equipment is stored in the subscriber equipment. In either method, when the subscriber equipment is powered on, the authentication means of the subscriber equipment compares the two identities. In the event that the identities are different, the subscriber equipment contacts the network, and if the new identity is authenticated the new identity is stored by the SIM or subscriber equipment (depending on whether it is operating in accordance with the first or second arrangement). The subscriber equipment thereafter continues to operate as normal. Whilst, in the first arrangement, the SIM is arranged to store an authenticated identity in the event that the identity of the mobile equipment is authenticated, if the identity of the mobile equipment is not authenticated, no action is taken and the mobile equipment assumes an inactive state.

### Summary of the Invention

In accordance with one aspect of the present invention there is provided a method of operating user stations in a subscriber system, said method comprising:
providing a subscriber with a removable data store for insertion into any of a plurality of user stations, the removable data store assuming a first operative state;
holding data defining a set of one or more user stations which are intended for use particularly with said removable data store, said set of user stations being provided with a particular functional feature and said removable data store having functionality associated with said feature;
monitoring the identity of a user station in which said removable data store is currently inserted, said user station being of a type approved for use in said system; and
altering the operative state of the removable data store to a second operative state, on the basis that said user station is not identified by said defining data, so as to suppress or alter said associated functionality.

In this aspect of the invention, the subscriber system has functionality allowing the identities of one or more user stations to be specified for which the data store will provide a given operative state. The altered operative state may, for example, provide a limited service in the network, if it is preferred that the data store is not used in combination with the user station into which it is inserted.

Preferably the subscriber system includes a telecommunications system comprising one or more nodes and the step of monitoring the identity of the user station is performed by one or more such nodes. In addition, the data defining a set of one or more user stations can be stored by one or more nodes in the system. In this arrangement the method includes transmitting a control message to the mobile station, which is transmitted on to the removable data store, and forms the basis for said step of altering the operative step of the removable data store.

Thus in embodiments of the invention, the records defining a predefined set of user stations to be associated with each data store are stored and utilised by nodes in the network infrastructure, and the trigger for said altering step is provided by the network.

Conveniently such alteration may consist of any of a number of actions, including overwriting the operator name string held in the data store, so that a predefined message such as "dial operator" appears in place of the operator name on the display of the user station, activating a fixed dialling list function in the user station to prevent calls being made to any dialling number except for one or more predefined dialling numbers, and/or overwriting records in the data store which are necessary to obtain service in the network.

The defining data may identify user stations individually (in a GSM-type system, by means of their IMEI), a range of user stations (in a GSM-type system, by specifying a range of IMEIs), and/or a type of user station (in a GSM-type system, by specifying a type approval code (TAC) contained in the IMEI). This allows significant flexibility in the specification of user stations which may be used in combination with a removable data store.

In accordance with a further aspect of the invention there is provided a removable data store for insertion into any of a plurality of user stations in a subscriber system, and said store comprising means for altering the operative state of said data store in response to data received from one or more nodes in the subscriber system.

Advantageously embodiments of the invention provide a mechanism whereby a set of user stations with which a particular data store is intended to be used may be updated. For example, it may be determined that the user station currently being used is acceptable to the system operator, even though it was not originally intended for use in combination with the data store in question.

### Brief Description of the Drawings

Other features and advantages of the invention will become clear from the following description of particular embodiments of the invention, in which reference is made to the accompanying drawings, wherein:
Figure 1 is a block diagram schematically illustrating a cellular mobile radio communications system;
Figure 2 is a block diagram schematically illustrating a mobile station used in the system of Figure 1;
Figures 3 to 5 illustrate data records held in a SIM in accordance with embodiments of the present invention; and
Figure 6 is a flow diagram illustrating procedures carried out in accordance with the present invention.

### Detailed Description of the Drawings

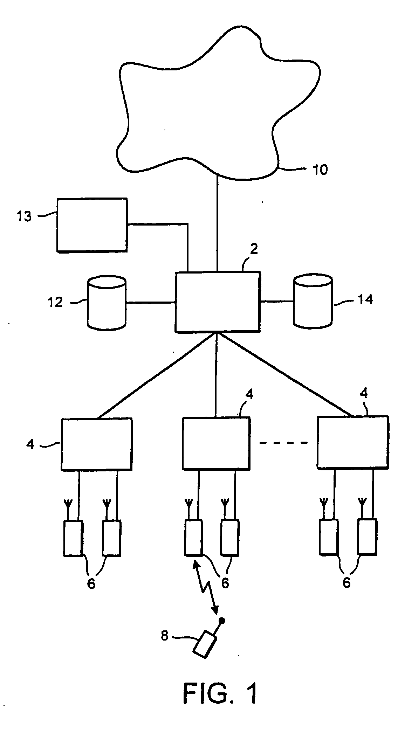

A GSM network, referred to as a public land mobile network (PLMN), is schematically illustrated in Figure 1. This is in itself known and will not be described in detail. A mobile switching centre (MSC) 2 is connected via communication links to a number of base station controllers (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to other networks such as a public service telephone network (PSTN), which is not illustrated. The mobile switching centre 2 is provided with a home location register (HLR) 12 which is a database storing subscriber authentication data including the international mobile subscriber identity (IMSI) which is stored in, and unique to, each SIM.

The mobile switching centre is also provided with a visitor location register (VLR), not shown in Fig. 1, which is a database temporarily storing subscriber authentication data for mobile stations active in its area.

In addition, the mobile network contains a short message service centre (SMC) 13, which is adapted to transmit both conventional GSM-type short message service (SMS) messages to selected mobile stations, and to transmit remote SIM updating (RSU) SMS messages to selected mobile stations (as described in European Patent Application No. 0562890, of which the contents are incorporated herein by reference).

Furthermore, in accordance with the present invention, the network is provided with an IMEI/IMSI register (IIR) 14, which is a database holding a list of IMSIs belonging to SIMs associated with the network, and against each IMSI record, a record of the IMEI of the user station in which the SIM was last known to be inserted.

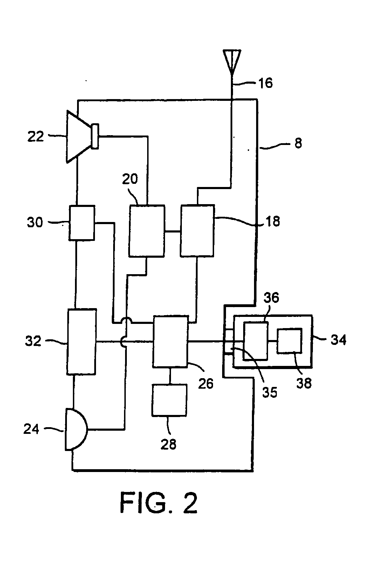

Referring to Figure 2, a mobile station 8 comprises a transmit/receive aerial 16, a radio frequency transceiver 18, a speech coder/decoder 20 connected to a loudspeaker 22 and a microphone 24, a processor circuit 26 and its associated memory 28, an LCD display 30 and a manual input port (keypad) 32. The mobile station is connected to a removable SIM 34 via electrical contacts 35. The International Mobile Equipment Identified (IMEI) is stored in a non-volatile portion of the mobile station memory 28.

The SIM 34 connected to the mobile station has a SIM processor 36, for example a Hitachi H8 microprocessor, and SIM memory 38, which includes for example 16 kilobytes of mask-programmed ROM containing the SIM operating system, 8 kilobytes of read/write EEPROM for the non-volative storage of data items and 256 bytes of RAM for use by the SIM processor 36 during operations.

At present, two physical formats of SIM are specified by the GSM and ISO standards. The first is referred to as an ID-1 SIM, which is a removable smart card complying with the ISO 7816 standard and being of similar dimensions to that of a conventional credit card. The second is referred to as a plug-in SIM, which is a smart card of the same thickness as the ID-1 SIM, but only measuring 25 millimetres in length and 15 millimetres in width.

As described above, the SIM 34 is used for the storage and retrieval of data items by the processor 26 of the mobile station 8. The command set, data file structure and data coding format for data communicated via the interface between the mobile station processor 26 and the SIM processor 36 are all specified, in the GSM system, in GSM technical specification 11.11.

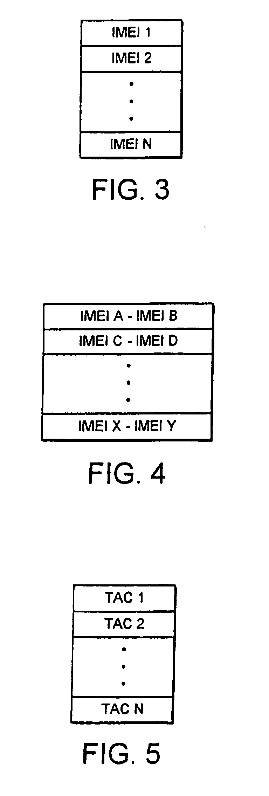

Fig. 3 illustrates an IMEI set record held in the EEPROM of the SIM memory 38 in accordance with one embodiment of the invention. This IMEI set record holds a list of IMEIs, specifying each IMEI in turn, for user stations with which the SIM 34 is intended to be used.

The IMEI as defined in the GSM specifications, consists of the following elements:
1. a type approval code (TAC) of six digits, which is unique for a particular handset type;
2. a factory code (FAC) of two digits, identifying the final assembly plans for the user station;
3. a serial number of six digits, which is unique for each mobile station of a given type;
4. a check digit of one digit; and
5. for GSM phase 2-type user stations only, a software version code of two digits.

Fig. 4 illustrates an alternative IMEI set record format for specifying the IMEIs of user stations which are intended for use in combination with a particular SIM 34. In this format, a list of ranges of IMEI numbers is given, each entry specifying a lower limit to the IMEI range and a higher limit to the IMEI range.

Fig. 5 illustrates a further alternative IMEI set record format for specifying the IMEIs of user stations which are intended to be used with a SIM 34. In this format, a list of TACs is provided, each entry specifying a particular TAC. This IMEI set record format essentially identifies user stations by their type, in view of the use of the type approval code as a type-specific identifier.

Any of the IMEI set record formats illustrated in Figs. 3 to 5 may be provided in the SIM memory 38 alone or in combination.

The IMEI set record will in practice hold one or more entries, depending on the number of mobile stations 8 which are intended for use with the SIM 34.

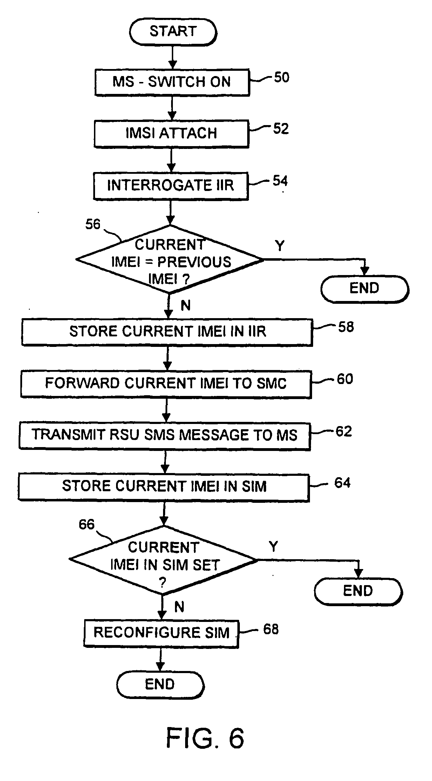

Fig. 6 illustrates an IMEI update procedure performed in accordance with an embodiment of the present invention. The procedure is designed to inhibit the use of a SIM 34 with a user station with which the SIM 34 is not intended to be used.

When the mobile station 8 is switched on in a location area in which the mobile station 8 was previously switched off, the mobile station 8 transmits a signal to the network initiating an "IMSI attach" procedure. This IMSI attach procedure involves the mobile station 8 transmitting not only a SIM identifier, in this case a temporary mobile subscriber identity (TMSI) of the SIM 34 attached to the mobile station 8, but also the IMEI of the mobile station 8, to the network for checking purposes. As a result of the IMSI attach procedure, a flag in the VLR of the MSC 2 is set to indicate that the mobile station 8 is switched on and able to receive incoming calls.

The MSC 2 then proceeds to interrogate the IIR 14 to retrieve the IMEI held against the IMSI record for the SIM 34 in question, indicating the last-known IMEI of the mobile station 8 in which the SIM 34 was previously inserted, step 56. If the IMEI currently signalled to the network is the same as the IMEI held previously in the IIR 14, determination step 56, the IMEI update procedure is terminated.

If however the IMEI currently signalled in the network is different to that previously stored in the IIR 14, the MSC 2 proceeds to command the IIR to store the IMEI currently signalled in the network against the record for the IMSI in question, step 58. The MSC 2 then proceeds to forward the current IMEI to the SMC 13, step 60.

On receipt of the current IMEI, the SMC 13 generates a remote SIM updating (RSU) short message service (SMS) message and transmits it, via the MSC 2, a BSC 4, and the serving BTS 6, to the mobile station 8. This RSU SMS message is as described in EP-A-0562890. The RSU SMS message contains a flag indicating to the SIM processor 36 that the SMS message is an RSU SMS message, and a command addressed to the SIM processor 36 to store the IMEI currently signalled by the mobile station in the network.

On receipt of the current IMEI updating RSU SMS message, the mobile station processor 26 forwards the message, via the interface 35, to the SIM processor 36, for storage as a conventional SMS message. However, because the SMS message contains an RSU flag, the SIM processor 36 does not store the message as a conventional SMS message, but conducts the command included in the RSU message, namely to store the IMEI in the message in a current IMEI record in the SIM memory 38, step 64.

The SIM processor 36 compares the IMEI stored in the current IMEI record with the set of IMEIs specified in the IMEI set data record.

If the current IMEI appears in the set, no further action is taken in the SIM 34. If however the current IMEI does not appear in the set defined for the SIM 34, the SIM processor 36 proceeds to self-reconfigure the SIM in accordance with any or all of a number of possible options under the control of the SIM operating system, step 68.

A first option is for the SIM processor 36 to over-write the operator name string stored in a record in the SIM memory 38 with a message indicating to a user that the mobile station 8 was not intended to be used with the SIM 34. This has the effect of the mobile station 8, presenting the message rather than the name of the mobile network operator to a user on the display 30 when the mobile station 8 is switched on.

A second option is for the SIM processor 36 to set a flag in the SIM memory 38 indicating that a "fixed dialling" feature is to be enabled in the mobile station 8. The enablement of this feature effectively prevents the mobile station 8 being used for calling dialling numbers other than one or more dialling numbers held in a fixed dialling number (FDN) list in the SIM memory 38. The SIM processor 36 may also enter a predetermined dialling number in the FDN list, such as a customer services help desk, to allow the SIM/mobile station incompatibility problem to be solved with help from the network operator. If this option is to be employed, the predetermined dialling number may either be preprogrammed in the SIM or included in the RSU SMS message which contains the current IMEI.

A third option is to disable critical data records held in the SIM to prevent the mobile station receiving service in the network. For example, the processor 36 of the SIM in its reconfigured state may prevent access to the authentication key record by the mobile station 8, thereby ensuring that a user of the mobile station 8 cannot be properly authenticated in the network, effectively barring the user from obtaining service in the network. Other critical SIM records may alternatively, or also, be disabled.

A fourth option is to alter the user's PIN number record held in the memory 38 of the SIM 34. This would effectively bar the user utilising the SIM 34, unless the user obtains the new PIN, for example by contacting a customer services help desk. If this option is to be employed, the new PIN may either be preprogrammed in the SIM or included in the RSU SMS message which contains the current IMEI.

Any or all of the above options, and variants thereof, may be used alone or in combination. There may also be some time delay between activation elements of a combination of the options. For example, an initial step taken by the SIM processor 36 may be to overwrite the operator name string held in the SIM memory 38. If after a predetermined delay time the current IMEI has not been updated with an acceptable mobile station 8 (i.e. one identified in the IMEI set record), the SIM 34 may enable the fixed dialling number feature, and/or disable critical SIM records, and/or overwrite a PIN number record.

With the SIM 34 reconfigured as described, the user of the mobile station 8 is either prompted, by means of a message appearing on the display of the user station, or forced, by disablement of one or more the functions of the SIM 34, to contact the network operator in order to solve the SIM/mobile station incompatibility problem. As a result, the network operator can make a decision as to whether the mobile station 8 currently used with the SIM 34, is acceptable or not.

If the new mobile station 8 is acceptable, the network operator retrieves the current IMEI of the mobile station 8 from the IIR 14 and generates a command addressed to the SMC 13 to originate an IMEI set record updating RSU SMS message. This IMEI set record updating RSU SMS message contains a command to the SIM processor 36 to store the current IMEI of the mobile station 8 in the IMEI set record. This RSU SMS message is constructed and sent to the mobile station 8 as described in EP-A-0562890.

On receipt of the IMEI set updating RSU SMS message, the mobile station processor 26 forwards the message, via the interface 35, to the SIM processor, for storage as a conventional SMS message. However, because the SMS message contains an RSU flag, the SIM processor does not store the message as a conventional SMS message, but conducts the command included in the RSU SMS message, namely to add the current IMEI to the IMEI set record. Since the current IMEI then appears in both the current IMEI record and the IMEI set record, the SIM processor 36 reverses the reconfiguration previously undertaken, thus returning the SIM 34 to its normal operative state.

An IMEI set updating RSU SMS message may be transmitted to the SIM 34 by the network operator at any time in order to add, or delete, one or more IMEIs from the IMEI set record. This alters the set of mobile stations 8 which are intended for use with the SIM 34. This may be required, for example, if the subscriber notifies the network operator of an imminent change of mobile station 8 to be used with the SIM 34. Alternatively, the network operator can originate an IMEI set updating RSU SMS message, in the case of the SIM 34 being originally intended for use with one or more ranges, or type, of mobile stations, when additional ranges or types of mobile stations 8 are introduced which are acceptable for use with the SIM 34.

Possible modifications and variations of the above-described embodiments are envisaged.

In accordance with functionality defined for the SIM 34 in the embodiments described, the SIM processor 36 is not able to interrogate the memory 28 of the mobile station 8 directly in order to ascertain the IMEI of the mobile station 8. However, with an alternative SIM/mobile station functionality, the SIM processor 36 may interrogate the mobile station processor 26 to retrieve the IMEI mobile station memory 28 directly. The SIM 34 could then self-reconfigure automatically without the need for the issuance of a notification of the current IMEI via the network.

Alternatively, it is not necessary for the records defining a set of IMEIs which are intended for use in combination with a SIM to be held in the SIM memory 38. For example, such records defining sets of IMEIs allocated to different SIMs may be held in the IIR 14 in the network. When the network is informed of the current IMEI associated with a SIM 34, the MSC 2 can ascertain, with reference to the set defined for the SIM 34 in the IIR 14, whether or not the mobile station 8 into which the SIM 34 has been inserted is a member of the allocated set. If not, the MSC 2 can originate an RSU SMS message, to be sent via the SMC 13, which has the effect of reconfiguring the SIM 34, using any of the options previously suggested. For example, an RSU SMS message may then be sent to the mobile station commanding the SIM processor 36 to overwrite the operator name string held in the SIM memory 38, to enable an FDN feature by setting a flag in the SIM memory 38, to disable a critical SIM record, and/or to alter a PIN number record in the SIM memory 38.

Furthermore, although in the above-described embodiment the IMSI attach procedure is used in order to inform the network of the IMEI of the mobile station into which the SIM 34 is currently inserted, other suitable signalling procedures carried out over the radio interface between the mobile station 8 and the network may be used to ascertain the IMEI of the mobile station 8. For example, the IMEI may be signalled from the mobile station 8 during a location updating procedure, during authentication procedures, etc.

The present invention may be particularly advantageously utilised in relation to a SIM which is designed for use with a particular type of compatible mobile station as indicated by the TAC in the mobile station's IMEI. For example, the mobile station 8 may be provided with a particular functional feature, the SIM 34 having data fields for use by the mobile station 8 for realising that feature. The present invention allow the SIM 34 to be reconfigured when used in a mobile station 8 which is not of the type with which the SIM 34 was intended to be used. Rather than disabling the current mobile station 8 in a particular manner, the SIM 34 may be reconfigured to suppress or alter the functionality associated with the feature which is not provided on the current mobile station 8.

Finally, although the present invention has been described in relation to a GSM-type network (i.e. GSM networks and variants thereof, such as a DCS 1800 network), the invention may also be realised in other types of mobile communications networks, whether using TDMA, CDMA, or other radio interface protocols, and in other types of subscriber systems utilising removable data stores such as smart cards.

### Recitation of Aspects of the Invention

The following clauses set forth the various aspects of embodiments of the invention:
A method of operating user stations in a subscriber system, said method comprising:
   providing a plurality of subscribers with removable data stores, each of which is for insertion into any of a plurality of user stations;
   holding data defining, for each of said data stores, a set of one or more user stations which are intended for use in combination with said data store, each said set being different;
   monitoring the identity of the user stations in which said data stores are currently inserted; and
   altering the operative state of a data store on the basis that the user station in which the data store is currently inserted is not a member of said set defined for the data store.

In the method as described above, said defining data is held in said data store. The defining data identifies user stations either individually, by a range of user stations, or by type of user station.

In the method described above, said memory portion is for holding an operator name string. The memory portion is for any one of the following: enabling a feature preventing said user station being used to call any dialling number other than one or more predetermined dialling numbers; holding data necessary to a user to obtain normal service in said system; and/or holding a user validation code such as a PIN number.

The altering step comprises altering data held in a memory portion in said data store if said current user station is not in said set defined for the data store, and, more particularly, comprises preventing the user station being used to obtain normal service in said system.

The method comprises transmitting a message to said user station via a radio interface to cause said altering step, and the message comprises data indicating the identity of said current user station.

In the method described above the current user station forwards data contained in said message to said data store.

The method can involve modifying the defining data, and include transmitting a message to said user station via a radio interface. Thereafter, the data store can be returned to its original operative state as a consequence of the modifying step.

In another aspect, embodiments of the invention provide a method of operating user stations in a subscriber system, said method comprising:
providing a subscriber with a removable data store for insertion into any of a plurality of user stations;
holding data specific to said data store, said data defining a set of one or more user stations which are intended for use in combination with said data store;
altering the operative state of a user station into which the data store is currently inserted on the basis that said current user station is not within said set; and
modifying said data store-specific data to identify at least one further user station which is intended for use with said data store.

In this aspect, said one further user station is the user station into which the data store is currently inserted.

In a further aspect there is provided a method of operating user stations in a subscriber system, said method comprising:
providing a subscriber with a removable data store for insertion into any of a plurality of user stations;
holding data specifying one or more user stations which are intended for use particularly with said data store;
monitoring the identity of a user station in which said data store is currently inserted, said current user station being of a type approved for use in said system; and
altering the operative state of the data store on the basis that said current user station is not identified by said specifying data.

The above methods can be invoked in a telecommunications system adapted to perform the steps defined in any of the preceding claims;

At least part of the above methods can be invoked by means of a removable data store for insertion into any of a plurality of user stations in a subscriber system, and said store comprising a memory portion holding data defining a set of one or more user stations which are intended for use in combination with said data store, and means for altering the operative state of said data store if the user station into which the data store is currently inserted is not in said set.

In the foregoing methods and apparatus, said subscriber system is a mobile communications system.

It will be appreciated that further modifications and variations may be employed without departing from the scope of the present invention.

## Claims

1. A method of operating user stations in a subscriber system, said method comprising:
providing a subscriber with a removable data store for insertion into any of a plurality of user stations, the removable data store assuming a first operative state;
holding data defining a set of one or more user stations which are intended for use particularly with said removable data store, said set of user stations being provided with a particular functional feature and said removable data store having functionality associated with said feature;
monitoring the identity of a user station in which said removable data store is currently inserted, said user station being of a type approved for use in said system; and
altering the operative state of the removable data store to a second operative state, on the basis that said user station is not identified by said defining data, so as to suppress or alter said associated functionality.

2. A method according to claim 1, in which the subscriber system comprises a telecommunications system comprising one or more nodes, and in which said step of monitoring the identity of said user station is performed by a said node.

3. A method according to claim 2, in which said defining data is held by one or more of said nodes.

4. A method according to any one of the preceding claims, further including transmitting a control message to the mobile station via a radio interface for use in said step of altering the operative state of the removable data store.

5. A method according to claim 4, in which said control message includes a transfer protocol identifier indicating that the message is of a type for data download to the removable data store from the mobile station.

6. A method according to any one of the preceding claims, including altering data held in a memory portion in said removable data store if said user station is not in said set defined for the removable data store.

7. A method according to claim 6, wherein said memory portion is for enabling a feature preventing said user station being used to call any dialling number other than one or more predetermined dialling numbers.

8. A method according to any one of the preceding claims, wherein said altering step prevents said user station being used to obtain normal service in said system.

9. A method according to any one of the preceding claims, wherein said defining data identifies user stations individually.

10. A method according to any one of the preceding claims, wherein said defining data identifies a range of user stations.

11. A method according to any one of the preceding claims, wherein said defining data identifies a type of user station.

12. A method according to any one of the preceding claims, further including the step of modifying the defining data.

13. A method according to claim 12, in which said modifying step comprises transmitting a message to said user station via a radio interface.

14. A method according to claim 12 or claim 13, further comprising returning said data store to the first operative state as a consequence of said modifying step.
